# EUROPEAN PATENT SPECIFICATION

(11) **EP 3 495 947 B1**
(45) Date of publication and mention of the grant of the patent: **30.03.2022**
(21) Application number: 17836276.0
(22) Date of filing: 17.07.2017
(51) Int. Cl.: G06F 9/30, G06F 9/38

(54) **OPERATION DEVICE AND METHOD OF OPERATING SAME**
BETRIEBSVORRICHTUNG UND VERFAHREN ZUM BETRIEB DAVON
DISPOSITIF D'EXPLOITATION ET SON PROCÉDÉ DE D'EXPLOITATION

(30) Priority: 05.08.2016 CN 201610640115
(43) Date of publication of application: 12.06.2019
(73) Proprietor: Cambricon Technologies Corporation Limited, Beijing 100191 (CN)
(72) Inventor: CHEN, Yunji, Shanghai 201203 (CN); LIU, Shaoli, Shanghai 201203 (CN); CHEN, Tianshi, Shanghai 201203 (CN)
(74) Representative: AWA Sweden AB
(86) International application number: PCT/CN2017/093161
(87) International publication number: WO 2018/024094

(56) References cited:
- EP-A1- 2 725 484
- WO-A2-02/084451
- CN-A- 1 349 159
- CN-A- 101 986 265
- CN-A- 102 495 719
- CN-A- 104 375 993
- US-A- 4 135 242
- US-A1- 2006 112 159
- US-A1- 2006 149 941

## Description

### FIELD OF THE INVENTION

The present invention belongs to the field of computer, in particular, to an operation device and operation method thereof used to perform effectively and flexibly the data of the same scale or different scales according to the instructions. It solves well the problem of more and more algorithms nowadays containing a large number of operation problems of data of the same or different scales, which reduces the limitations of the scale of the operation unit, and improves the flexibility and effectiveness of vector operations.

### BACKGROUND OF THE INVENTION

With the advent of the era of big data, applications related to vector operations are also increasing. As the amount of data involved in operation continues to increase, data specifications and dimensions continue to increase, and the form of operation also gradually increases. On the one hand, the scale of computing units is difficult to expand significantly with the significant rising of the amount of data, thereby making it necessary to regulate operational data during operation. On the other hand, these operations are no longer limited to be performed among data in a unified specification, but a large part of the operation is performed among data of different specifications or different dimensions, thus raising higher requirements for the flexibility of the operation device.

In the existing technology, a known solution for performing vector operations is to use a general-purpose processor (CPU) or a graphics processor (GPU). However, as this method or its structure is more suitable for scalar operations, it is less efficient when performing vector operations; or, because its on-chip cache is too small, it can not meet the requirements for efficient completion of large-scale vector operations. In another existing technology, the vector operation is performed using a specially-designed vector operation device, i.e., a vector operation is performed using a custom storage unit and a process unit. However, the existing dedicated vector operation devices are limited to register stacks and can only support vector operations of the same length, resulting in insufficient flexibility.

In addition, the corresponding instruction set of the above device can only perform the operation for the data with the same length, and is limited by the scale of the memory and the scale of the operation unit. For data of different lengths and data that does not satisfy the scale of the operation unit, one way is to use multiple instructions to sequentially call data, and another way is to use cyclic instructions for repeatedly calling. This not only makes the structure of the instruction set complex, instruction queue lengthy, and the performance low efficient, but also there are many run-time restrictions and flexibility is poor, the convenience can not be provided for large-scale vector operations.

Patent document US 2006/149941 A1 (COLAVIN OSVALDO [US] ET AL) 6 July 2006 discloses operating the processor in a first mode to execute a first subset of instructions in the plurality of instructions, with each instruction in the first subset executed no more than one time each time the instruction is fetched. The processor is operated in a second mode to execute a second subset of instructions in the plurality of instructions, with each instruction in the second subset executed a plurality of times each time the instruction is fetched.

### OBJECTS AND SUMMARY OF THE INVENTION

### (1) Technical problem to be solved

The purpose of the present invention belongs to the field of computer, in particular, to an operation device and operation method thereof used to perform effectively and flexibly the data of the same scale or different scales according to the instructions. It solves the problem that more and more current algorithms contain a large number of data of the same scale or different scales, which reduces the scale of the operation unit.

### (2) Technical solutions

The present invention is defined according to the claims. An example provides an operation device comprising an instruction module, a data module and an operation module, wherein:
the instruction module is used to cache an instruction, and provide the instruction to the data module and operation module;
the data module is used to provide an operation data to the operation module according to the instruction in the instruction module;
the operation module is used to perform an operation according to the instruction in the instruction module and the operation data provided by the data module.

Further, the instruction module comprises an instruction cache unit, an instruction process unit, a dependency process unit, a storage queue unit, wherein:
The instruction cache unit is used to store the instruction that is to be performed, the instruction process unit is used to obtain an instruction from the instruction cache unit and to process the instruction, the dependency process unit is used to determine whether the instruction and a previous instruction that is being performed access the same data:
if yes, the dependency process unit stores the instruction in the storage queue unit, and then provides the instruction to the operation module after the previous instruction that is being performed is performed;
otherwise, the instruction is directly provided to the operation module.

Further, the instruction process unit comprises:
an instruction obtaining part used to obtain an instruction from the instruction cache unit;
a decoding part used to decode the obtained instruction;
an instruction queue part used to sequentially store the decoded instruction.

Further, the data module comprises a data I/O unit and a data temporary storage unit, wherein the data temporary storage unit is used to store the operation data and provide it to the operation module after adjusting the operation data.

Further, the data temporary storage unit used to provide the stored operation data to the operation module after adjusting it, comprising:
when the lengths of the two operation data that are involved in the operation are less than or equal to the operation scale of the operation module, the data temporary storage unit directly provides the two operation data to the operation module;
when the lengths of the two operation data that are involved in the operation are greater than the operation scale of the operation module, each operation data is divided into a plurality of sub-operation data whose length is less than or equal to the operation scale, and the sub-operation data is provided to the operation module in multiple times;
according to the invention as claimed, when the length of one of the two operation data that are involved in the operation is greater than the operation scale of the operation module and the other is less than or equal to the operation scale of the operation module, the operation data having a length greater than the operation scale is divided into a plurality of sub-operation data having a length equal to or smaller than the operation scale, and the plurality of sub-operation data and the operation data having a length less than or equal to the operation scale are provided to the operation module in multiple times.

Further, the operation data is a vector, and the operation module is used to perform a vector logic operation or a vector arithmetic.

Another example provides an operation method for operation device comprising:
S1, caching an instruction in the instruction module;
S2, providing the instruction in the instruction module to the data module, which provides an operation data to the operation module according to the instruction;
S3, providing the instruction in the instruction module to the operation module, which performs an operation according to the instruction and the operation data provided by the operation module.

Further, the instruction module comprises an instruction cache unit, an instruction process unit, a dependency process unit, a storage queue unit; the step S1 comprises:
S11, storing an instruction that is to be performed in the instruction cache unit;
S12, the instruction process unit obtaining the instruction from the instruction cache unit and processing the instruction;
S13, the dependency process unit determining whether the instruction and a previous instruction that is being performed access the same data: if yes, the dependency process unit stores the instruction in the storage queue unit, and then provides the instruction to the operation module after the previous instruction that is being performed is performed, otherwise providing directly to the operation module.

Further, the instruction process unit comprises a instruction obtaining part, a decoding part and an instruction queue part, wherein the step S12 comprises:
S121, the instruction obtaining part obtaining an instruction from the instruction cache unit;
S122, the decoding part decoding the obtained instruction;
S123, the instruction queue part sequentially storing the decoded instruction.

Further, the data module comprises a data I/O unit and a data temporary storage unit, wherein the step S2 comprises:
S21, the data I/O unit directly reading an operation data from the memory and storing it in the data temporary storage unit;
S22, the data temporary storage unit providing the stored operation data to the operation module after adjusting it.

Further, the step S22 comprises:
when the lengths of the two operation data that are involved in the operation are less than or equal to the operation scale of the operation module, the data temporary storage unit directly provides the two operation data to the operation module;
when the lengths of the two operation data that are involved in the operation are greater than the operation scale of the operation module, each operation data is divided into a plurality of sub-operation data whose length is less than or equal to the operation scale, and the sub-operation data is provided to the operation module in multiple times;
according to the invention as claimed, when the length of one of the two operation data that are involved in the operation is greater than the operation scale of the operation module and the other is less than or equal to the operation scale of the operation module, the operation data having a length greater than the operation scale is divided into a plurality of sub-operation data having a length equal to or smaller than the operation scale, and the plurality of sub-operation data and the operation data having a length less than or equal to the operation scale are provided to the operation module in multiple times.

Further, the operation data is a vector, and the operation module is used to perform a vector logic operation or a vector arithmetic.

### (3) Beneficial effects

The operation device and the operation method thereof can read the operation data from the memory temporarily and store it in the data temporary storage unit when only one instruction is sent. The data temporary storage unit provides the operation data to the operation module according to the length of operation data after adjusting the operation data. Thus, operations for data with different lengths can be supported and the scale of the operation unit can be reduced. In addition, a dependency process unit to solve the correlation problem in data storage, improves the execution performance including a large number of operation tasks. Moreover, the instruction used has a simplified format, which makes the instruction set structure simple, convenient to use, and supports flexible data length and operation scale.

The present invention can be applied to the following (including but not limited to) scenes: various electronics such as data processing, robot, computer, printer, screener, telephone, tablet, smart terminal, cell phone, tachograph, navigator, sensor, camera, cloud server, camera, video camera, projector, watch, headset, mobile storage, wearable device; various transportation tools such as plane, ship, vehicle; various household appliances such as TV, A/C, microwave, fridge, electric cooker, humidifier, washing machine, electric light, gas stove, range hood; and various medical equipment including nuclear magnetic resonance, B ultrasound, electrocardiograph.

### BRIEF DESCRIPTION OF FIGURES

Fig. 1 is a structural schematic view of the operation device provided by the present invention.
Fig. 2 is a schematic view of the structure of the instruction module in the present invention.
Fig. 3 is a schematic view of the structure of the data module in the present invention.
Fig. 4 is a schematic view of the structure of the operation module in the present invention.
Fig. 5 is a flow chart of the method of the instruction supporting operations of data with different lengths in the present invention.
Fig. 6 is a schematic view illustrating the operation of cyclically reading a shorter vector to perform an operation when different length operation vectors are provided according to embodiments of the present invention.

### DETAILED DESCRIPTION OF THE EMBODIMENTS

In order that the objectives, technical schemes and advantages of the present invention will become more apparent, the present invention will be described in more detail in conjunction with specific embodiments and with reference to the drawings and examples above.

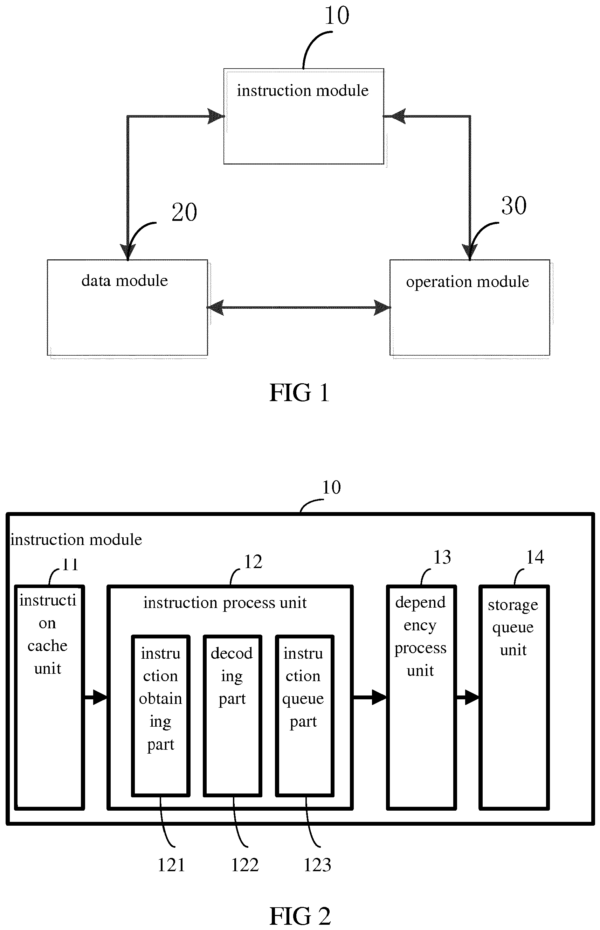

Fig. 1 is a structural schematic view of the operation device provided by the present invention. As shown in Fig. 1, the device comprises an instruction module 10, a data module 20 and an operation module 30. The instruction module 10 is used to cache an instruction, and provide the instruction to the data module 20 and operation module 30. The instruction in the instruction module 10 controls the direction of the data flow of the data module 20, and the data of the data module 20 influences the processing of the dependency in the instruction module 10. At the same time, the instruction in the instruction module 10 controls the specific operation of the operation module 30. Whether or not the operation of the operation module 30 is completed will control whether the instruction module 10 reads a new instruction. The data module 20 provides the operation module 30 with specific operation data, and the operation module 30 sends the operation result back to the data module 20 for storage.

Fig. 2 is a structural schematic view of the instruction module for the device provided by the present invention. As shown in Fig. 2, the instruction module 10 comprises an instruction cache unit 11, an instruction process unit 12, a dependency process unit 13 and a storage queue unit 14. Among them, the instruction process unit 12 is again divided into three parts: an instruction obtaining part 121, a decoding part 122 and an instruction queue part 123. The instruction cache unit 11 is used to cache the instruction during the execution of an instruction. When an instruction is executed and if the instruction is also the earliest instruction in the instruction that has not been submitted in the instruction cache unit 11, the instruction will be submitted. One submitted, the change on the state of the device caused by the operation performed by the instruction can not be revoked. The instruction obtaining part 121 is used to obtain the next instruction to be performed from the instruction cache unit 11, and sends the instruction to the decoding part 122. The decoding part 122 decodes the instruction and transmits the decoded instruction to the instruction queue 123. The instruction queue part 123 sequentially stores the decoded instruction. The dependency process unit 13 is used to processes the possible data dependency between the current instruction and the previous instruction. For example, when data is accessed from the data module 20, the previous and next instructions may access data in the same storage space. If operations have been performed on the data when the previous instruction has not been performed, the consistency of data will be affected and hence the accuracy of the operation result. Therefore, if the current instruction is detected by the dependency process unit 13 to have a dependency on the data of the previous instruction, the instruction must wait in the storage queue unit 14 until the dependency is eliminated, wherein the storage queue unit 14 is an ordered queue. The instruction that has a dependency on the data with the previous instruction is stored in the queue until the dependency is eliminated.

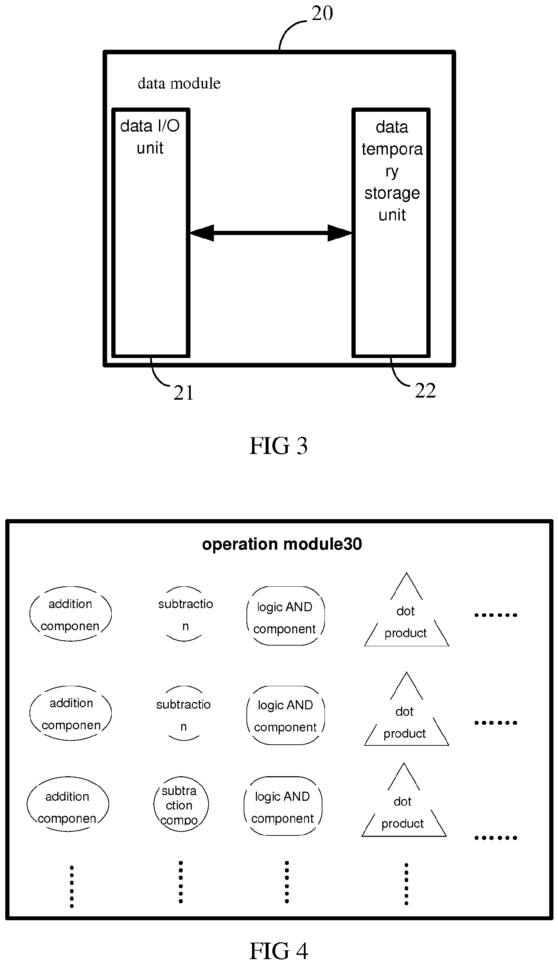

Fig. 3 is a schematic view of the structure of the data module in the present invention. As shown in Fig. 3, the data module 20 consists of two parts, i.e. a data I/O unit 21 and a data temporary storage unit 22. The data I/O unit 21 is used to interact with the memory, i.e. It can directly read data from or write the data into the memory. The data temporary storage unit 22 is constituted by Scratchpad Memory, wherein the Scratchpad Memory can be implemented by various different memory devices (SRAM, eDRAM, DRAM, memristor, 3D-DRAM or non-volatile memory, etc.). The data temporary storage unit 22 can store operation data of different sizes, such as the vector data of various scales. The data I/O unit 21 reads out the necessary operation data according to the instruction, and temporarily stores it on the data temporary storage unit 22. Due to the use of a temporary scratchpad memory, it is possible to store operation data with different lengths. At the same time, in the operation process, the data temporary storage unit 22 may adjust the operation data according to the scale of the operation unit 30 and the length of the operation data, and provide the operation data to the operation module 30.

Specifically, when the lengths of the two operation data that are involved in the operation are less than or equal to the operation scale of the operation module, the data temporary storage unit 22 directly provides the two operation data to the operation module 30. For example, the operation scale of the operation unit 30 performs an operation for processing two sets of vectors at a time. Each set of vectors includes 4 elements, and the operation between (A1, A2, A3, A4) and (B1, B2, B3, B4) is the operation scale of the operation unit 30. Both operation data are vectors of less than 4 elements, such as (A1, A2, A3) and (B1, B2). At this time, (A1, A2, A3) and (B1, B2) can be directly provided to the operation module 30 for operations.

When the lengths of the two operation data that are involved in the operation are greater than the operation scale of the operation module, the data temporary storage unit 22 divides each operation data into a plurality of sub-operation data whose length is less than or equal to the operation scale, and the sub-operation data is provided to the operation module in multiple times. For example, the operation scale of the operation unit 30 is a scale of the operation that can process two sets of vectors at a time. Each set of vectors includes 4 elements, and the operation between (A1, A2, A3, A4) and (B1, B2, B3, B4) is the operation scale of the operation unit 30. Both operation data are greater than the operation scale, such as (A1, A2, A3, A4, A5) and (B1, B2, B3, B4, B5). At this time, (A1, A2, A3, A4, A5) can be divided into D1 (A1, A2, A3, A4) and D2 (A5) and (B1, B2, B3, B4, B5) can be divided into d1 (B1, B2, B3, B4) and d2 (B5). They are then provided to the operation unit 30 twice, wherein D1 (A1, A2, A3, A4) and d1 (B1, B2, B3, B4) are provided for operation for the first time, D2 (A5) and D2(B5) are provided the second time. The above example is to divide the operation data larger than the operation scale into 2 segments, and provide the sub-operation data of the corresponding segment each time. When the number of divided segments of the two operation data is inconsistent, for example, the first operation data is divided into 3 segments represented as D1, D2, D3, and the second operation data is divided into 2 segments represented as d1 and d2, the first operation data D1, D2, D3 is provided to the operation unit three times, and these 3 times need to cycle to provide the second operation data d1 and d2, namely to provide D1 and d1 for the first time, to provide D2 and d2 for the second time, and to provide D3 and d1 for the third time. Again, for example, the first operation data is divided into 5 segments represented as D1, D2, D3, D4, D5, and the second operation data is divided into 3 segments represented as d1, d2 and d3, the operation data is provided to the operation unit five times, that is, D1 and d1 are provided for the first time, D2 and d2 for the second time, D3 and d3 for the third time, D4 and d1 for the fourth time and D5 and d2 for the fifth time.

When the length of one of the two operation data that are involved in the operation is greater than the operation scale of the operation module and the other is less than or equal to the operation scale of the operation module, the operation data having a length greater than the operation scale is divided into a plurality of sub-operation data having a length equal to or smaller than the operation scale, and the plurality of sub-operation data and the operation data having a length less than or equal to the operation scale are provided to the operation module in multiple times. For the sake of brief example, when the length of the first operation data is larger than the operation scale, it is divided into three segments D1, D2, and D3. When the second operation data is less than or equal to the operation scale, it has not to be divided, and represented as d. Then the first and second operational data is provided to the operation unit three times, i.e., D1 and d are provided for the first time, D2 and d for the second time, and D3 and d for the third time.

In summary, the adjustment of the operation data by the data temporary storage unit 22 means that when the operation data length is not larger than the operation scale of the operation unit, the data to be operated can be directly sent to the operation unit 30 through the memory; otherwise, the data conforming to the operation scale of the operation unit 30 is sent to the operation unit 30 during each operation. After the operation is completed or the batch of data enters the next stage of the pipeline, the memory sends the operation unit 30 a new batch of data conforming to the operation scale of the operation unit 30 for operation. In addition, when the two data to be operated have the same length, they are, directly or after being divided, sent into the operation unit 30 for operation; otherwise, the data with larger length is segmented and then read in order, and the data segment with smaller length is read cyclically after being segmented until the end of the operation.

Fig. 4 is a schematic view of the structure of the operation module of the device provided by the present invention. As shown in Fig. 4, The operation module is composed of several different operation components, such as a vector addition component, a vector subtraction component, a vector logic AND component, a vector dot product component, and the like. There are several types of each component. With these operation components, the operation module can support a variety of vector operations.

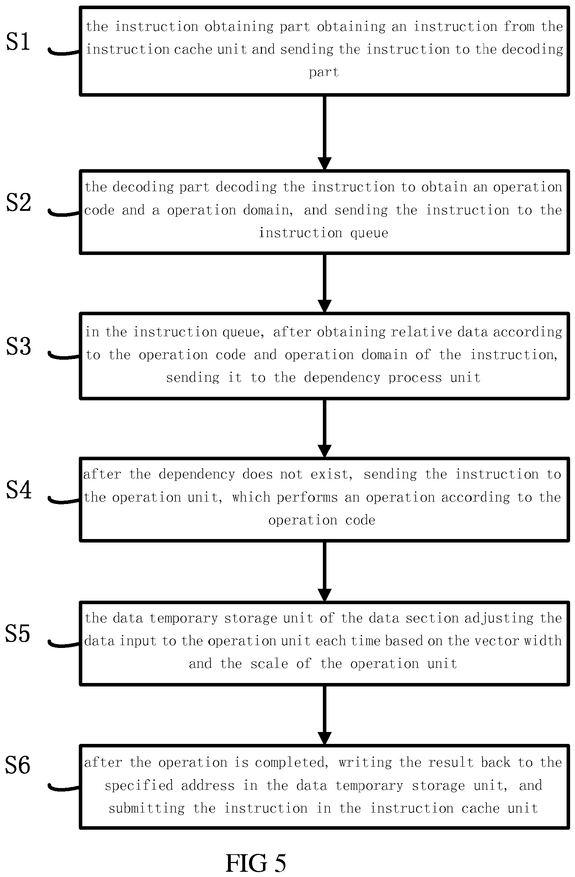

Fig. 5 is a flow chart of the method of the instruction supporting operations of data with different lengths in the present invention. The process of performing the instruction comprises:
S1, the instruction obtaining part 121 of the instruction process unit 12 obtains a vector operation instruction from the instruction cache unit 11 and sends the instruction to the decoding part 122 of the instruction process unit.
S2, the decoding part 122 decodes the instruction and the divides the instruction into an operation code and various different operation domains according to custom instruction rules. The custom instruction rule adopted here is that the instruction includes an operation code and at least one operation domain. The operation code defines the type of the vector operation. The operation field stores the data value to be operated, the address of the data storage, the length of the data, or the address of storing the operation result. The meaning of the specific operation domain differs depending on the operation code. Then, the operation instruction is sent to the instruction queue part 123.
S3, in the instruction queue part 123, the data to be operated is obtained according to the operation code and operation domain of the instruction, and sent to the dependency process unit 13 for analysis and determination on the data dependency.
S4, in the dependency process unit 14, it analyzes whether there is a dependency on the data between the instruction and the previous instruction that has not been performed yet. If there is no dependency, the instruction has not to wait; otherwise, the instruction has to be stored in the storage queue unit and wait until it no longer has a dependency on the data from the previous instruction that does end. The instruction is sent to the operation unit 30.
S5, When the instruction is sent to the operation unit 30 to prepare the operation, the data temporary storage unit 22 in the data module 20 adjusts the data according to the length of the data and the size of the operation unit 30, that is, when the vector length is not larger than the operation scale of the operation unit 30, the data to be operated can be directly sent to the operation unit 30; otherwise, the data conforming to the operation scale of the operation unit 30 is sent to the operation unit 30 during each operation. After the operation is completed, a new batch of data conforming to the operation scale is sent to the operation unit 30 for operation until the operation ends. When the two vectors to be operated have the same length, they are directly sent into the operation unit for operation; otherwise, the vector with larger length is read in order, and the data segment with smaller length is read cyclically until the end of the operation. If the vector to be operated has to be adjusted while being adjusted according to the scale of the operation unit and being adjusted on the length, the data conforming to the operation scale is ensured to be read in order after the longer length vectors is ensured to be read in order and the smaller length vector is ensured to be read cyclically.
S6, after the operation is completed, writing the result back to the specified address in the data temporary storage unit 22, and submitting the instruction in the instruction cache unit 11.

In order that the process will become more apparent, the flow will be described in more detail with a provision of specific embodiments and with reference to the drawings and examples above.

### Embodiment 1

The present embodiment describes a specific process of performing vector INTER-AND operation using an operation device. First, the format of the vector INTER-AND operation instruction in the present embodiment is:

| | operation domain 1 | operation domain 2 | operation domain 3 | operation domain 4 | operation domain 5 |
|---|---|---|---|---|---|
| VAV | start storage address of vector 1 | length of vector 1 | start storage address of vector 2 | length of vector 2 | storage address for operation result |

Assuming that each address of the register can store 16-bit data, and the operation unit includes 4 INTER-AND operators, each of which can perform INTER-AND operation of 16-bit data at the same time. Taking the operation instruction VAV 00001 01000 01001 01000 10001 as an example, this instruction indicates that the vector 0 and the vector 1 perform the VAV operation, that is, the vector INTER-AND operation. Specifically, the process of vector INTER-AND operation includes:
S1, the instruction obtaining part 121 of the instruction process unit 11 obtains a vector operation instruction from the instruction cache unit 11, i.e., VAV 00001 01000 01001 01000 10001, and sends the instruction to the decoding part 122 of the instruction process unit 12.
S2, the decoding part 122 decodes the instruction to obtain the instruction operation code VAV indicating performing the vector INTER-AND operation in which there are five operation domains and each represent the start address and length of the vector to be operated vin0, of vin1, the storage address of operation result, then the operation instruction is sent to the instruction queue part 123.
S3, in the instruction queue part 123, the data to be operated is obtained according to the operation code and operation domain of the instruction. The instruction operation code is VAV, which is to perform vector INTER-AND logical operations. The data address and data length to be operated are obtained from the operation domains 1, 2, 3, and 4, that is, the start address of the vector vinO is 00001, and the length of the vector vinO is 01000, the start address of the vector vin1 is 01001, and the length of the vector vin1 is 01000. That is, the vector vinO starts from the address 00001, and reads data with a length of 8 addresses, that is, addresses 00001∼01000; the vector vin1 starts from address 01001, and also reads a data with length of 8 addresses. Then the instruction is sent to the dependency process unit 13 for analysis and determination on the data dependency.
S4, in the dependency process unit 123, it analyzes whether there is a dependency on the data between the instruction and the previous instruction that has not been performed yet. If there is no dependency, the instruction has not to wait; otherwise, the instruction has to be stored in the storage queue unit 14 and wait until it no longer has a dependency on the data from the previous instruction that does end. The instruction is sent to the operation unit 30.
S5, The data I/O unit 21 in the data module 20 obtains data from an external memory in advance, and stores the obtained data in the data temporary storage unit 22. When the instruction is sent to the operation unit 30 to prepare the operation, the data temporary storage unit 22 finds the corresponding data according to the data address indicated by the instruction and provides it to the operation unit 30. Before the provision, the data temporary storage unit 22 adjusts the data according to the length of the data and the operation scale of the operation unit 30. Here, the operation unit 30 can only process the INTER-AND operation of four sets of 16-bit vectors at a time. Therefore, the data input to the operation unit 30 for the first time is the data of the first 4 address lengths indicated by vinO and the first 4 address length indicated by vin1, that is, the addresses 00001∼00100 and 01001~01100 are calculated. After the operation is completed, the data of the last four address lengths of vinO and vin1 are loaded to perform operations, that is, the data with the addresses of 00101 to 01000 and 01101 to 10000 are subjected to the INTER-AND operation.
S6, after the operation is completed, writing the result back to the specified address 10001 in the data temporary storage unit 22, and submitting the vector INTER-AND instruction in the instruction cache unit.

### Embodiment 2

The present embodiment describes a specific process of performing vector addition operation using an operation device. First, the format of the vector addition operation instruction in the present embodiment is:

| | operation domain 1 | operation domain 2 | operation domain 3 | operation domain 4 | operation domain 5 |
|---|---|---|---|---|---|
| VA | start storage address of vector 1 | length of vector 1 | start storage address of vector 2 | length of vector 2 | storage address for operation result |

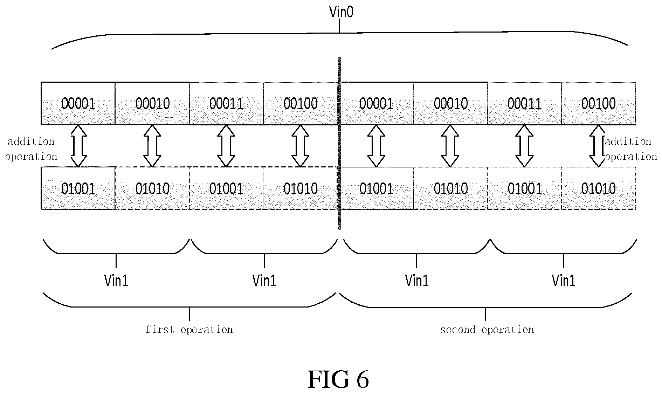

Assuming that each address of the register can store 16-bit data, and the operation unit includes four addition operators, each of which can perform addition operation of 16-bit data at the same time. Taking VA 00001 01000 01001 00010 10001 as an example, this instruction indicates that the vector 0 and the vector 1 perform the VA operation, that is, the vector addition operation. The process of performing the vector addition instruction by the operation device comprises:
S1, the instruction obtaining part 121 of the instruction process unit 12 obtains a vector operation instruction from the instruction cache unit 11, i.e., VA 00001 01000 01001 00010 10001, and sends the instruction to the decoding part 12 of the instruction process unit.
S2, the decoding part 12 decodes the instruction to obtain the instruction operation code VA indicating performing the vector addition operation in which there are five operation domains and each represent the start address and length of the vector to be operated vin0, of vin1, the storage address of operation result, then the operation instruction is sent to the instruction queue part 123.
S3, in the instruction queue part 123, the data to be operated is obtained according to the operation code and operation domain of the instruction. The instruction operation code is VA, which is to perform vector addition operations. The data address and data length to be operated are obtained from the operation domains 1, 2, 3, and 4, that is, the start address of the vector vinO is 00001, and the length of the vector vinO is 01000, the start address of the vector vin1 is 01001, and the length of the vector vin1 is 00010. That is, the vector vinO starts from the address 00001, and reads data with a length of 8 addresses, that is, addresses 00001~01000; the vector vin1 starts from address 01001 to reads a data with length of 2 addresses. Then the instruction is sent to the dependency process unit 13 for analysis and determination on the data dependency.
S4, in the dependency process unit 13, it analyzes whether there is a dependency on the data between the instruction and the previous instruction that has not been performed yet. If there is no dependency, the instruction has not to wait; otherwise, the instruction has to be stored in the storage queue unit and wait until it no longer has a dependency on the data from the previous instruction that does end. The instruction is sent to the operation unit.
S5, after the dependency does not exist, the vector addition instruction is sent to the operation unit 30. The operation unit 30 obtains the necessary vector from the data temporary storage unit 22 according to the address and length of the necessary data, and then performs an addition operation in the operation unit. Here, since the operation unit 30 can only process the addition of 4 sets of 16-bit vectors at a time, it is not possible to send all the data to the operation unit at a time to perform an operation, and it is necessary to perform in multiple times. As vinO and vin1 have different lengths and vin1 has a short length, so the data of vin1 has to be read cyclically when in operation. As shown in Fig. 6, the data sent to the operation unit 30 for the first time is the data of the first 4 address lengths indicated by vinO and the data of the two address lengths indicated by vin1, that is, the transmitted data is the data at addresses 00001 to 00100 and 01001∼01010, wherein the correspondence of the data to be operated is: the data at address 00001 and the data at address 01001 are added, the data at address 00010 and the data at address 01010 are added, and the data at address 00011 and data at address 01001 are added, and the data at address 00100 and the data at address 01010 are added. After operation, the data sent to the operation unit 30 for the second time is the data of the last 4 address lengths indicated by vinO and the data of the two address lengths indicated by vin1, that is, the data at addresses 00101 to 01000 and 01001∼01010 are added, wherein the correspondence of the data to be operated is: the data at address 00101 and the data at address 01001 are added, the data at address 00110 and the data at address 01010 are added, and the data at address 00111 and data at address 01001 are added, and the data at address 01000 and the data at address 01010 are added.
S6, after the operation is completed, writing the result back to the specified address 10001 in the data temporary storage unit 22, and submitting the vector addition instruction in the instruction cache unit 11.

The above-mentioned specific embodiments describe the purpose, technical solution and beneficial effects of the present invention in further detail. It should be understood that the foregoing is only specific embodiments of the present invention and is not intended to be limiting of the present invention, and any modifications, equivalent substitutions, which fall within the scope of the invention as defined by the claims, are included.

## Claims

1. An operation device, comprising an instruction module (10), a data module (20) and an operation module (30), wherein:
the instruction module (10) is used to cache an instruction, and provide the instruction to the data module (20) and operation module (30);
the data module (20) is used to provide an operation data to the operation module (30) according to the instruction in the instruction module (10);
the operation module (30) is used to perform an operation according to the instruction in the instruction module (10) and the operation data provided by the data module (20);
wherein the data module (20) comprises a data I/O unit (21) and a data temporary storage unit (22), wherein the data temporary storage unit is used to store the operation data and provide it to the operation module after adjusting the operation data;
wherein the data temporary storage unit (22) storing the operation data and providing it to the operation module (30) after adjusting the operation data comprising:
when lengths of two operation data that are involved in the operation are less than or equal to an operation scale of the operation module, the data temporary storage unit directly provides the two operation data to the operation module;
when lengths of two operation data that are involved in the operation are greater than an operation scale of the operation module, each operation data is divided into a plurality of sub-operation data whose length is less than or equal to the operation scale, and the sub-operation data is provided to the operation module in multiple times;
**characterized in that**:
when a length of one of two operation data that are involved in the operation is greater than an operation scale of the operation module and a length of another operation data of the two operation data that are involved in the operation is less than or equal to the operation scale of the operation module, the operation data having the length greater than the operation scale is divided into a plurality of sub-operation data each having a length equal to or smaller than the operation scale, and the plurality of sub-operation data and the operation data having the length less than or equal to the operation scale are provided to the operation module in multiple times;
wherein the operation data is a vector, and the length of the operation data is a number of elements of the vector.

2. The operation device according to claim 1, wherein the instruction module (10) comprises an instruction cache unit (11), an instruction process unit (12), a dependency process unit (13), a storage queue unit (14), wherein:
the instruction cache unit (11) is used to store the instruction that is to be performed,
the instruction process unit (12) is used to obtain an instruction from the instruction cache unit and to process the instruction,
the dependency process unit (13) is used to determine whether the instruction and a previous instruction that is being performed access a same data:
if yes, the dependency process unit stores the instruction in the storage queue unit (14), and then provides the instruction to the operation module after the previous instruction that is being performed is performed;
otherwise, the instruction is directly provided to the operation module (30).

3. The operation device according to claim 2, wherein the instruction process unit (12) comprises:
an instruction obtaining part (121) used to obtain an instruction from the instruction cache unit (11);
a decoding part (122) used to decode the obtained instruction;
an instruction queue part (123) used to sequentially store the decoded instruction.

4. The operation device according to claim 1, wherein the operation module (30) is used to perform a vector logic operation or a vector arithmetic.

5. An operation method, comprising:
an instruction module (10) caching an instruction, and providing the instruction to a data module (20) and an operation module (30);
the data module (20) providing an operation data to the operation module (30) according to the instruction in the instruction module (10));
the operation module (30) performing an operation according to the instruction in the instruction module (10) and the operation data provided by the data module (20);
wherein the data module (20) comprises a data I/O unit (21) and a data temporary storage unit (22), and
wherein the method comprises the data temporary storage unit storing the operation data and providing it to the operation module after adjusting the operation data;
wherein the data temporary storage unit (22) storing the operation data and providing it to the operation module (30) after adjusting the operation data, comprises:
when lengths of two operation data that are involved in the operation are less than or equal to an operation scale of the operation module, the data temporary storage unit directly provides the two operation data to the operation module;
when lengths of two operation data that are involved in the operation are greater than an operation scale of the operation module, each operation data is divided into a plurality of sub-operation data whose length is less than or equal to the operation scale, and the sub-operation data is provided to the operation module in multiple times;
**characterized in that**
when a length of one of two operation data that are involved in the operation is greater than an operation scale of the operation module and a length of another operation data of the two operation data that are involved in the operation is less than or equal to the operation scale of the operation module, the operation data having the length greater than the operation scale is divided into a plurality of sub-operation data each having a length equal to or smaller than the operation scale, and the plurality of sub-operation data and the operation data having the length less than or equal to the operation scale are provided to the operation module in multiple times;
wherein the operation data is a vector, and the length of the operation data is a number of elements of the vector.

6. The operation method according to claim 5, wherein the instruction module comprises an instruction cache unit (11), an instruction process unit (12), a dependency process unit (13), a storage queue unit (14), wherein the operation method comprises:
the instruction cache unit (11) storing the instruction that is to be performed;
the instruction process unit (12) obtaining the instruction from the instruction cache unit and processing the instruction;
the dependency process unit (13) determining whether the instruction and a previous instruction that is being performed access a same data:
if yes, the dependency process unit storing the instruction in the storage queue unit (14), and then providing the instruction to the operation module after the previous instruction that is being performed is performed;
otherwise, directly providing the instruction to the operation module (30).

7. The operation method according to claim 6, wherein the instruction process unit (12) comprises:
an instruction obtaining part (121), a decoding part (122), and an instruction queue part (123);
wherein the operation method comprises:
the instruction obtaining part (121) obtaining an instruction from the instruction cache unit (11);
the decoding part (122) decoding the obtained instruction; and
the instruction queue part (123) sequentially storing the decoded instruction.

8. The operation method according to claim 5, wherein the method further comprises the operation module (30) performing a vector logic operation or a vector arithmetic.

## Patentansprüche

1. Betriebsvorrichtung, die ein Instruktionsmodul (10), ein Datenmodul (20) und ein Betriebsmodul (30) umfasst, wobei:
das Instruktionsmodul (10) verwendet wird, um eine Instruktion zwischenzuspeichern und die Instruktion an das Datenmodul (20) und das Betriebsmodul (30) zu übermitteln;
das Datenmodul (20) verwendet wird, um gemäß der Instruktion in dem Instruktionsmodul (10) Betriebsdatenelemente an das Betriebsmodul (30) zu übermitteln;
das Betriebsmodul (30) verwendet wird, um eine Operation gemäß der Instruktion in dem Instruktionsmodul (10) und den durch das Datenmodul (20) übermittelten Betriebsdatenelementen durchzuführen;
wobei das Datenmodul (20) eine Daten-E/A-Einheit (21) und eine Datentemporärspeichereinheit (22) umfasst, wobei die Datentemporärspeichereinheit verwendet wird, um die Betriebsdatenelemente zu speichern und nach dem Justieren der Betriebsdatenelemente an das Betriebsmodul zu übermitteln;
wobei der Vorgang, in dem die Datentemporärspeichereinheit (22) die Betriebsdatenelemente speichert und nach dem Justieren der Betriebsdatenelemente an das Betriebsmodul (30) übermittelt, umfasst:
wenn die Längen von zwei Betriebsdatenelementen, die an der Operation beteiligt sind, maximal so groß wie eine Betriebsskala des Betriebsmoduls sind, so übermittelt die Datentemporärspeichereinheit die zwei Betriebsdatenelemente direkt an das Betriebsmodul;
wenn die Längen von zwei Betriebsdatenelementen, die an der Operation beteiligt sind, größer als eine Betriebsskala des Betriebsmoduls sind, so wird jedes Betriebsdatenelement in mehrere Unterbetriebsdatenelemente unterteilt, deren Länge maximal so groß wie die Betriebsskala ist, und die Unterbetriebsdatenelemente werden in mehreren Zeiten an das Betriebsmodul übermittelt;
**dadurch gekennzeichnet, dass**:
wenn eine Länge von einem von zwei Betriebsdatenelementen, die an der Operation beteiligt sind, größer als eine Betriebsskala des Betriebsmoduls ist und eine Länge eines anderen Betriebsdatenelements der zwei Betriebsdatenelemente, die an der Operation beteiligt sind, maximal so groß wie die Betriebsskala des Betriebsmoduls ist, die Betriebsdatenelemente, die die Länge haben, die größer als die Betriebsskala ist, in mehrere Unterbetriebsdatenelemente unterteilt werden, die jeweils eine Länge haben, die maximal so groß wie die Betriebsskala ist, und die mehreren Unterbetriebsdatenelemente und die Betriebsdatenelemente, die die Länge haben, die maximal so groß wie die Betriebsskala ist, in mehreren Zeiten an das Betriebsmodul übermittelt werden;
wobei die Betriebsdatenelemente ein Vektor sind und die Länge der Betriebsdatenelemente eine Anzahl von Elementen des Vektors ist.

2. Betriebsvorrichtung nach Anspruch 1, wobei das Instruktionsmodul (10) eine Instruktions-Cache-Einheit (11), eine Instruktionsprozesseinheit (12), eine Abhängigkeitsprozesseinheit (13) und eine Speicherwarteschlangeneinheit (14) umfasst, wobei:
die Instruktions-Cache-Einheit (11) verwendet wird, um die auszuführende Instruktion zu speichern, die Instruktionsprozesseinheit (12) verwendet wird, um eine Instruktion von der Instruktions-Cache-Einheit zu erhalten und die Instruktion zu verarbeiten, die Abhängigkeitsprozesseinheit (13) verwendet wird, um zu bestimmen, ob die Instruktion und eine vorherige Instruktion, die ausgeführt wird, auf dieselben Daten zugreifen:
wenn ja, so speichert die Abhängigkeitsprozesseinheit die Instruktion in der Speicherwarteschlangeneinheit (14) und übermittelt dann die Instruktion an das Betriebsmodul, nachdem die vorherige Instruktion, die ausgeführt wird, ausgeführt wurde;
andernfalls wird die Instruktion direkt an das Betriebsmodul (30) übermittelt.

3. Betriebsvorrichtung nach Anspruch 2, wobei die Instruktionsprozesseinheit (12) umfasst:
einen Instruktionserhalt-Teil (121), der zum Erhalten einer Instruktion von der Instruktions-Cache-Einheit (11) verwendet wird;
einen Decodierteil (122), der zum Decodieren der erhaltenen Instruktion verwendet wird;
einen Instruktionswarteschlangenteil (123), dem zum sequentiellen Speichern der decodierten Instruktion verwendet wird.

4. Betriebsvorrichtung nach Anspruch 1, wobei das Betriebsmodul (30) zum Durchführen einer Vektorlogikoperation oder einer Vektorarithmetik verwendet wird.

5. Betriebsverfahren, das umfasst, dass:
ein Instruktionsmodul (10) eine Instruktion zwischenspeichert und die Instruktion an ein Datenmodul (20) und ein Betriebsmodul (30) übermittelt;
das Datenmodul (20) gemäß der Instruktion in dem Instruktionsmodul (10) ein Betriebsdatenelement an das Betriebsmodul (30) übermittelt; und
das Betriebsmodul (30) einen Operation gemäß der Instruktion in dem Instruktionsmodul (10) und den durch das Datenmodul (20) übermittelten Betriebsdatenelementen durchführt;
wobei das Datenmodul (20) eine Daten-E/A-Einheit (21) und eine Datentemporärspeichereinheit (22) umfasst, und
wobei das Verfahren umfasst, dass die Datentemporärspeichereinheit die Betriebsdatenelemente speichert und nach dem Justieren der Betriebsdatenelemente an das Betriebsmodul übermittelt;
wobei der Vorgang, in dem die Datentemporärspeichereinheit (22) die Betriebsdatenelemente speichert und nach dem Justieren der Betriebsdatenelemente an das Betriebsmodul (30) übermittelt, umfasst:
wenn die Längen von zwei Betriebsdatenelementen, die an der Operation beteiligt sind, maximal so groß wie eine Betriebsskala des Betriebsmoduls sind, so übermittelt die Datentemporärspeichereinheit die zwei Betriebsdatenelemente direkt an das Betriebsmodul;
wenn die Längen von zwei Betriebsdatenelementen, die an der Operation beteiligt sind, größer als eine Betriebsskala des Betriebsmoduls sind, so wird jedes Betriebsdatenelement in mehrere Unterbetriebsdatenelemente unterteilt, deren Länge maximal so groß wie die Betriebsskala ist, und die Unterbetriebsdatenelemente werden in mehreren Zeiten an das Betriebsmodul übermittelt;
**dadurch gekennzeichnet, dass**:
wenn eine Länge von einem von zwei Betriebsdatenelementen, die an der Operation beteiligt sind, größer als eine Betriebsskala des Betriebsmoduls ist und eine Länge eines anderen Betriebsdatenelements der zwei Betriebsdatenelemente, die an der Operation beteiligt sind, maximal so groß wie die Betriebsskala des Betriebsmoduls ist, die Betriebsdatenelemente, die die Länge haben, die größer als die Betriebsskala ist, in mehrere Unterbetriebsdatenelemente unterteilt werden, die jeweils eine Länge haben, die maximal so groß wie die Betriebsskala ist, und die mehreren Unterbetriebsdatenelemente und die Betriebsdatenelemente, die die Länge haben, die maximal so groß wie die Betriebsskala ist, in mehreren Zeiten an das Betriebsmodul übermittelt werden;
wobei die Betriebsdatenelemente ein Vektor sind und die Länge der Betriebsdatenelemente eine Anzahl von Elementen des Vektors ist.

6. Betriebsverfahren nach Anspruch 5, wobei das Instruktionsmodul eine Instruktions-Cache-Einheit (11), eine Instruktionsprozesseinheit (12), eine Abhängigkeitsprozesseinheit (13) und eine Speicherwarteschlangeneinheit (14) umfasst, wobei das Betriebsverfahren umfasst, dass:
die Instruktions-Cache-Einheit (11) die auszuführende Instruktion speichert;
die Instruktionsprozesseinheit (12) die Instruktion von der Instruktions-Cache-Einheit erhält und die Instruktion verarbeitet;
die Abhängigkeitsprozesseinheit (13) bestimmt, ob die Instruktion und eine vorherige Instruktion, der ausgeführt wird, auf dieselben Daten zugreifen:
wenn ja, so speichert die Abhängigkeitsprozesseinheit die Instruktion in der Speicherwarteschlangeneinheit (14) und übermittelt dann die Instruktion an das Betriebsmodul, nachdem die vorherige Instruktion, die ausgeführt wird, ausgeführt wurde;
andernfalls direktes Übermitteln der Instruktion an das Betriebsmodul (30).

7. Betriebsverfahren nach Anspruch 6, wobei die Instruktionsprozesseinheit (12) umfasst:
einen Instruktionserhalt-Teil (121), einen Decodierteil (122) und einen Instruktionswarteschlangenteil (123);
wobei das Betriebsverfahren umfasst, dass:
der Instruktionserhalt-Teil (121) eine Instruktion von der Instruktions-Cache-Einheit (11) erhält;
der Decodierteil (122) die erhaltene Instruktion decodiert; und
der Instruktionswarteschlangenteil (123) die decodierte Instruktion sequentiell speichert.

8. Betriebsverfahren nach Anspruch 5, wobei das Verfahren des Weiteren umfasst, dass das Betriebsmodul (30) eine Vektorlogikoperation oder eine Vektorarithmetik durchführt.

## Revendications

1. Dispositif d'exploitation, comprenant un module d'instruction (10), un module de données (20) et un module d'exploitation (30), dans lequel :
le module d'instruction (10) est utilisé pour mettre une instruction en mémoire cache, et pour fournir l'instruction au module de données (20) et au module d'exploitation (30) ;
le module de données (20) est utilisé pour fournir une donnée d'exploitation au module d'exploitation (30) en fonction de l'instruction dans le module d'instruction (10) ;
le module d'exploitation (30) est utilisé pour exécuter une opération en fonction de l'instruction dans le module d'instruction (10) et de la donnée d'exploitation fournie par le module de données (20) ;
dans lequel le module de données (20) comprend une unité d'entrée/sortie de données (21) et une unité de stockage provisoire de données (22), dans lequel l'unité de stockage provisoire de données est utilisée pour stocker la donnée d'exploitation et pour la fournir au module d'exploitation après ajustement de la donnée d'exploitation ;
dans lequel, par l'unité de stockage provisoire de données (22), le stockage de la donnée d'exploitation et la fourniture de celle-ci au module d'exploitation (30) après ajustement de la données d'exploitation comprennent :
lorsque des longueurs de deux données d'exploitation qui sont impliquées dans l'exploitation sont inférieures ou égales à une échelle d'exploitation du module d'exploitation, l'unité de stockage provisoire de données fournit directement les deux données d'exploitation au module d'exploitation ;
lorsque des longueurs de deux données d'exploitation qui sont impliquées dans l'exploitation sont supérieures à une échelle d'exploitation du module d'exploitation, chacune des données d'exploitation est divisée en une pluralité de sous-données d'exploitation dont la longueur est inférieure ou égale à l'échelle d'exploitation, et les sous-données d'exploitation sont fournies au module d'exploitation en plusieurs fois ;
**caractérisé en ce que** :
lorsqu'une longueur de l'une de deux données d'exploitation qui sont impliquées dans l'exploitation est supérieure à une échelle d'exploitation du module d'exploitation et une longueur de l'autre des deux données d'exploitation qui sont impliquées dans l'exploitation est inférieure ou égale à l'échelle d'exploitation du module d'exploitation, la donnée d'exploitation ayant la longueur supérieure à l'échelle d'exploitation est divisée en une pluralité de sous-données d'exploitation, chacune d'elles ayant une longueur inférieure ou égale à l'échelle d'exploitation, et la pluralité de sous-données d'exploitation et la donnée d'exploitation ayant la longueur inférieure ou égale à l'échelle d'exploitation sont fournies au module d'exploitation en plusieurs fois ;
dans lequel la donnée d'exploitation est un vecteur, et la longueur de la donnée d'exploitation est un nombre d'éléments du vecteur.

2. Dispositif d'exploitation selon la revendication 1, dans lequel le module d'instruction (10) comprend une unité de mémoire cache d'instruction (11), une unité de traitement d'instruction (12), une unité de traitement de dépendance (13), une unité de file d'attente de stockage (14), dans lequel :
l'unité de mémoire cache d'instruction (11) est utilisée pour stocker l'instruction qui doit être exécutée,
l'unité de traitement d'instruction (12) est utilisée pour obtenir une instruction depuis l'unité de mémoire cache d'instruction et pour traiter l'instruction,
l'unité de traitement de dépendance (13) est utilisée pour déterminer si l'instruction et une instruction précédente qui est en cours d'exécution accèdent à une même donnée :
si oui, l'unité de traitement de dépendance stocke l'instruction dans l'unité de file d'attente de stockage (14) puis fournit l'instruction au module d'exploitation après que l'instruction précédente qui est en cours d'exécution est exécutée ;
sinon, l'instruction est directement envoyée au module d'exploitation (30).

3. Dispositif d'exploitation selon la revendication 2, dans lequel l'unité de traitement d'instruction (12) comprend :
une partie d'obtention d'instruction (121) utilisée pour obtenir une instruction depuis l'unité de mémoire cache d'instruction (11) ;
une partie de décodage (122) utilisée pour décoder l'instruction obtenue ;
une partie de file d'attente d'instruction (123) utilisée pour stocker séquentiellement l'instruction décodée.

4. Dispositif d'exploitation selon la revendication 1, dans lequel le module d'exploitation (30) est utilisé pour exécuter une opération logique vectorielle ou une arithmétique vectorielle.

5. Procédé d'exploitation, comprenant :
par un module d'instruction (10), la mise d'une instruction en mémoire cache, et la fourniture de l'instruction à un module de données (20) et à un module d'exploitation (30) ;
par le module de données (20), la fourniture d'une donnée d'exploitation au module d'exploitation (30) en fonction de l'instruction dans le module d'instruction (10) ;
par le module d'exploitation (30), l'exécution d'une opération en fonction de l'instruction dans le module d'instruction (10) et de la donnée d'exploitation fournie par le module de données (20) ;
dans lequel le module de données (20) comprend une unité d'entrée/sortie de données (21) et une unité de stockage provisoire de données (22), et
dans lequel le procédé comprend, par l'unité de stockage provisoire de données, le stockage de la donnée d'exploitation et la fourniture de celle-ci au module d'exploitation après ajustement de la donnée d'exploitation ;
dans lequel, par l'unité de stockage provisoire de données (22), le stockage de la donnée d'exploitation et la fourniture de celle-ci au module d'exploitation (30) après ajustement de la données d'exploitation comprennent :
lorsque des longueurs de deux données d'exploitation qui sont impliquées dans l'exploitation sont inférieures ou égales à une échelle d'exploitation du module d'exploitation, l'unité de stockage provisoire de données fournit directement les deux données d'exploitation au module d'exploitation ;
lorsque des longueurs de deux données d'exploitation qui sont impliquées dans l'exploitation sont supérieures à une échelle d'exploitation du module d'exploitation, chacune des données d'exploitation est divisée en une pluralité de sous-données d'exploitation dont la longueur est inférieure ou égale à l'échelle d'exploitation, et les sous-données d'exploitation sont fournies au module d'exploitation en plusieurs fois ;
**caractérisé en ce que** :
lorsqu'une longueur de l'une de deux données d'exploitation qui sont impliquées dans l'exploitation est supérieure à une échelle d'exploitation du module d'exploitation et une longueur de l'autre des deux données d'exploitation qui sont impliquées dans l'exploitation est inférieure ou égale à l'échelle d'exploitation du module d'exploitation, la donnée d'exploitation ayant la longueur supérieure à l'échelle d'exploitation est divisée en une pluralité de sous-données d'exploitation, chacune d'elles ayant une longueur inférieure ou égale à l'échelle d'exploitation, et la pluralité de sous-données d'exploitation et la donnée d'exploitation ayant la longueur inférieure ou égale à l'échelle d'exploitation sont fournies au module d'exploitation en plusieurs fois ;
dans lequel la donnée d'exploitation est un vecteur, et la longueur de la donnée d'exploitation est un nombre d'éléments du vecteur.

6. Procédé d'exploitation selon la revendication 5, dans lequel le module d'instruction comprend une unité de mémoire cache d'instruction (11), une unité de traitement d'instruction (12), une unité de traitement de dépendance (13), une unité de file d'attente de stockage (14),
dans lequel le procédé d'exploitation comprend :
par l'unité de mémoire cache d'instruction (11), le stockage de l'instruction qui doit être exécutée ;
par l'unité de traitement d'instruction (12), l'obtention de l'instruction depuis l'unité de mémoire cache d'instruction et le traitement de l'instruction ;
par l'unité de traitement de dépendance (13), la détermination si l'instruction et une instruction précédente qui est en cours d'exécution accèdent à une même donnée :
si oui, par l'unité de traitement de dépendance, le stockage de l'instruction dans l'unité de file d'attente de stockage (14) puis la fourniture de l'instruction au module d'exploitation après que l'instruction précédente qui est en cours d'exécution est exécutée ;
sinon, la fourniture de l'instruction directement au module d'exploitation (30).

7. Procédé d'exploitation selon la revendication 6, dans lequel l'unité de traitement d'instruction (12) comprend :
une partie d'obtention d'instruction (121), une partie de décodage (122) et une partie de file d'attente d'instruction (123) ;
dans lequel le procédé d'exploitation comprend :
par la partie d'obtention d'instruction (121), l'obtention d'une instruction depuis l'unité de mémoire cache d'instruction (11) ;
par la partie de décodage (122), le décodage de l'instruction obtenue ; et
par la partie de file d'attente d'instruction (123), le stockage séquentiel de l'instruction décodée.

8. Procédé d'exploitation selon la revendication 5, dans lequel le procédé comprend en outre, par le module d'exploitation (30), l'exécution d'une opération logique vectorielle ou d'une arithmétique vectorielle.
